# EUROPÄISCHE PATENTSCHRIFT

(11) **EP 2 855 137 B1**
(45) Veröffentlichungstag und Bekanntmachung des Hinweises auf die Patenterteilung: **11.10.2017**
(21) Anmeldenummer: 13728317.2
(22) Anmeldetag: 29.05.2013
(51) Int. Cl.: B30B 11/04, B30B 15/04, B30B 1/18, B29L 31/00, B29C 43/02

(54) **PRESSE**
PRESS
PRESSE

(30) Priorität: 31.05.2012 DE 102012010767
(43) Veröffentlichungstag der Anmeldung: 08.04.2015
(73) Patentinhaber: Fette Compacting GmbH, 21493 Schwarzenbek (DE)
(72) Erfinder: PANNEWITZ, Thomas, 21514 Klein Pampau (DE); MALLON, Stephan, 21527 Kollow (DE)
(74) Vertreter: Hauck Patentanwaltspartnerschaft mbB
(86) Internationale Anmeldenummer: PCT/EP2013/001580
(87) Internationale Veröffentlichungsnummer: WO 2013/178355

(56) Entgegenhaltungen:
- WO-A1-2008/104969
- DE-C- 820 234
- US-A- 3 163 105
- US-A- 4 873 923
- US-A- 5 272 904

## Beschreibung

Die Erfindung betrifft eine Presse zur Herstellung eines Presslings aus pulverförmigem Material, umfassend einen Pressenrahmen und eine in dem Pressenrahmen angeordnete Presseinheit mit mindestens einem oberen Pressstempel und/oder mindestens einem unteren Pressstempel sowie mindestens einer Aufnahme für durch den oberen und/oder unteren Pressstempel zu verpressendes pulverförmiges Material, mindestens eine obere Antriebseinheit mit mindestens einem oberen Antriebsmotor zum Verfahren des oberen Pressstempels in vertikaler Richtung und/oder mindestens eine untere Antriebseinheit mit mindestens einem unteren Antriebsmotor zum Verfahren des unteren Pressstempels und/oder der Aufnahme in vertikaler Richtung.

Eine Presse ist bekannt aus WO 2008/104969 A1. Diese Presse besitzt ein rahmenförmiges Pressengestell, bei dem eine obere und eine untere Rahmenplatte über mehrere randständige Streben, die parallel zu einer Längsachse des Pressengestells orientiert sind, miteinander verbunden sind. Zwischen der oberen und unteren Rahmenplatte ist eine senkrecht zur Längsachse ausgerichtete, mit dem Pressengestell fest verbundene Matrizenplatte angeordnet, in der sich eine Aufnahme zur Verpressung eines pulverförmigen Materials befindet. Ein Paar in Richtung der Längsachse orientierte Führungsstangen, die im Abstand voneinander jeweils im oberen und im unteren Bereich des Pressengestells an diesem fest angeordnet sind, durchdringen die Matrizenplatte sowie jeweils eine oberhalb und unterhalb der Matrizenplatte angeordnete, zur Aufnahme und Bewegung eines Pressstempels vorgesehene Pressanordnung, die auf den Führungsstangen verschieblich sind. Zwei im Abstand voneinander in der Matrizenplatte fest verankerte Gewindestangen greifen jeweils in eine zugeordnete Gewindemutter ein, die in der oberen und der unteren Pressanordnung drehbeweglich gelagert sind, wobei die beiden oberen und die beiden unteren jeweils von einem von der zugeordneten Pressanordnung getragenen Antriebsmotor angetrieben sind. Über die an der Matrizenplatte befestigten Spindeltriebe, die paarweise synchronisiert von dem jeweils einen Antriebsmotor betrieben werden, sind die obere und die untere Pressanordnung in vertikaler Richtung beweglich. Die Antriebsmotoren zum Betätigen der Spindeltriebe werden somit bei jeder vertikalen Bewegung der Pressanordnung entsprechend mitbewegt. Die beim Verpressen des pulverförmigen Materials jeweils am oberen und unteren Pressstempel aufzubringende, als Aktionskraft fungierende Presskraft generiert jeweils eine Reaktionskraft, die über die paarweise ober- und unterhalb an der Matrizenplatte fest angeordneten Gewindestangen aufgenommen und in die Matrizenplatte abgetragen werden müssen. Dieser Aufbau erfordert eine erhebliche Dimensionierung der Matrizenplatte und auch der jeweiligen Pressanordnung, um die im Zuge des Pressens und im Zuge der hierbei erfolgenden Bewegung der oberen und unteren Pressanordnung auftretenden Kräfte und Momente aufzunehmen.

Eine weitere Presse ist bekannt aus EP 2 311 587 A1. Diese Presse besitzt ein Pressengestell mit einem Pressenoberteil und einem Pressenunterteil und vertikalen Stützsäulen, die das Pressenoberteil und das Pressenunterteil miteinander verbinden. Für das Pressergebnis mit solchen Pressen sowie den Verschleiß der Presse ist eine möglichst präzise Ausrichtung sämtlicher während des Pressvorgangs im Kraftfluss befindlichen Bauteile von entscheidender Bedeutung. Bei der bekannten Presse ist eine Vielzahl von Bauteilen, die in der Regel einzeln gefertigt werden, und Bauteilebenen im Kraftfluss. Hierdurch addieren sich Fertigungstoleranzen und es kann aufgrund der hohen Presskräfte zu einem Verbiegen von Komponenten der Presse kommen. Insbesondere ist es möglich, dass die Achsen der oberen und unteren Antriebseinheiten zum Antreiben der Ober- und Unterstempel nicht präzise miteinander fluchten. Hierdurch kann es zu einem fehlerhaften Pressergebnis kommen. Außerdem kommt es während des Pressens zu einem erhöhten Verschleiß einzelner Bauteile, beispielsweise Dichtungen und Führungsbänder von Zylindern bei Hydraulikpressen, Spindel/Spindelmutter-Einheiten bei Spindelpressen oder Führungen der Werkzeugführungsgestelle.

Aus US 5 272 904 ist eine Abkantpresse bekannt mit einem balken- oder wangenförmigen Stößel, welcher an seinen beiden Enden je mit einer Kolbenstange eines Kraftzylinders gelenkig verbunden ist. Zur Übertragung der Presskraft von der Kolbenstange auf den Stößel ist eine gelenkartige Stoßverbindung vorgesehen, welche durch ein Doppelgelenk mit zwei wirkungsmäßig in Reihe liegenden Stoßgelenken gebildet ist. Tragorgane überbrücken die Stoßverbindungen. Gemäß einer Ausführung ist ein Tragorgan in Kraftrichtung unterteilt in einen mit der Gelenkachse verbundenen Oberteil und einen mit der Gelenkachse verbundenen Unterteil. Der Oberteil und der Unterteil sind durch Tragbolzen in Form von Schrauben lose miteinander verbunden. Zwischen den Schraubenköpfen und den Schenkeln des Oberteils sind Federelemente, zum Beispiel Tellerfedern, eingesetzt.

Aus US 4 873 923 A ist eine hydraulische Presse bekannt mit einer durch vier Hydraulikzylinder gestützten Trägerplatte. Bei einer dezentralen Belastung auf die Trägerplatte wirken die der dezentralen Belastung nächsten Hydraulikzylinder mit erhöhter Haltekraft.

Ausgehend von dem erläuterten Stand der Technik liegt der Erfindung die Aufgabe zugrunde, eine Presse der eingangs genannten Art bereitzustellen, mit der in konstruktiv einfacher Weise ein optimales Pressergebnis erreicht wird, insbesondere die Einflüsse eines Verbiegens von Komponenten der Presse auf das Pressergebnis minimiert werden.

Die Erfindung löst diese Aufgabe durch den Gegenstand von Anspruch 1. Vorteilhafte Ausgestaltungen finden sich in den abhängigen Ansprüchen, der Beschreibung und den Figuren.

Für eine Presse der eingangs genannten Art löst die Erfindung die Aufgabe dadurch, dass die mindestens eine obere Antriebseinheit über mindestens ein oberes Kraftübertragungselement seitlich versetzt auf den mindestens einen oberen Pressstempel wirkt und/oder dass die mindestens eine untere Antriebseinheit über mindestens ein unteres Kraftübertragungselement seitlich versetzt auf den mindestens einen unteren Pressstempel und/oder die Aufnahme wirkt, und dass zwischen dem oberen Kraftübertragungselement und der mindestens einen oberen Antriebseinheit mindestens ein oberes, sich bei einem Pressvorgang verformendes Federelement angeordnet ist und/oder dass zwischen dem unteren Kraftübertragungselement und der mindestens einen unteren Antriebseinheit mindestens ein unteres, sich bei einem Pressvorgang verformendes Federelement angeordnet ist.

Die erfindungsgemäße Presse besitzt einen Pressenrahmen, der mittels Füßen oder direkt auf dem Untergrund aufsteht. In dem Pressenrahmen ist eine Presseinheit mit mindestens einem oberen Pressstempel und/oder mindestens einem unteren Press stempel angeordnet. Die Presseinheit besitzt darüber hinaus eine Aufnahme, in die zu verpressendes Pulver vor dem Verpressen durch den oder die Pressstempel gefüllt wird. Bei dem pulverförmigen Material kann es sich beispielsweise um Metall- oder Keramikpulver handeln. Die Aufnahme ist zwischen dem Oberstempel und dem Unterstempel angeordnet. In der Regel umfasst die Presse mindestens einen Ober- und einen Unterstempel, die in der Aufnahme zum Verpressen des eingefüllten Pulvers zusammenwirken. Es ist jedoch grundsätzlich auch denkbar, eine Verpressung beispielsweise nur von oben mit nur einem Oberstempel vorzunehmen, wenn die Aufnahme einen geschlossenen Boden besitzt.

Die oberen und/oder unteren Pressstempel können an einer oberen bzw. einer unteren Stempelplatte angeordnet sein. Zum vertikalen Bewegen der Ober- und/oder Unterstempel im Zuge des Pressvorgangs sind obere und/oder untere Antriebseinheiten mit oberen und/oder unteren Antriebsmotoren vorgesehen. Grundsätzlich ist es möglich, mehr als eine, beispielsweise zwei obere Antriebseinheiten mit zwei oberen Antriebsmotoren und/oder mehr als eine, beispielsweise zwei untere Antriebseinheiten mit zwei unteren Antriebsmotoren vorzusehen. Sind zwei obere Antriebseinheiten und/oder zwei untere Antriebseinheiten vorgesehen, können diese beispielsweise symmetrisch auf einander gegenüberliegenden Seiten des Pressenrahmens angeordnet sein. Es ist jedoch auch denkbar, nur auf einer Seite eine Antriebseinheit vorzusehen und auf der gegenüberliegenden Seite lediglich eine Führungseinheit. Wie erläutert, kann die untere Antriebseinheit einen unteren Pressstempel oder eine Aufnahme in vertikaler Richtung antreiben. Es ist also ein Betrieb der Presse sowohl im Ausstoßverfahren möglich, bei der die Aufnahme stationär ist und die Ober- und Unterstempel gegenüber der Aufnahme verfahren werden, als auch im Abzugsverfahren, bei dem der Unterstempel stationär ist und die Aufnahme sowie der Oberstempel verfahrbar sind. Grundsätzlich lässt sich bei der erfindungsgemäßen Presse die Anzahl der Pressachsen und damit der parallel hergestellten Presslinge in weiten Grenzen erhöhen. Die Presseinheit kann ein Modul bilden, welches als Ganzes aus der Presse entnommen und gegen eine andere ebenfalls ein Modul bildende Presseinheit ausgetauscht werden kann. Die Aufnahme kann in einer sogenannten Matrizenplatte ausgebildet sein. Sie kann fest an dem Pressenrahmen angeordnet sein.

Erfindungsgemäß wirkt die mindestens eine obere Antriebseinheit über ein oberes Kraftübertragungselement seitlich versetzt auf den mindestens einen oberen Pressstempel bzw. wirkt die mindestens eine untere Antriebseinheit über ein unteres Kraftübertragungselement seitlich versetzt auf den mindestens einen unteren Pressstempel und/oder die Aufnahme. Die Antriebseinheiten wirken also dezentral auf die Pressstempel. Die Bewegungsrichtung (bzw. Kraftrichtung) der Antriebseinheit(en) kann parallel beabstandet zu der Bewegungsrichtung (bzw. Kraftrichtung) des Oberstempels und des Unterstempels bzw. der Aufnahme sein. Die Antriebseinheiten greifen also insbesondere nicht-koaxial an der Presseinheit an. Die von der oder den Antriebseinheiten ausgeübte Kraft wird mittels des Kraftübertragungselements auf die Presseinheit, insbesondere den oberen Pressstempel und den unteren Pressstempel bzw. die Aufnahme übertragen. Bei den im Zuge des Pressvorgangs auftretenden sehr hohen Kräften kann es, wie eingangs erläutert, zu einer erheblichen Verformung, zum Beispiel Verbiegung, insbesondere des Kraftübertragungselements kommen. Dies wiederum kann zu einer Verkippung von Teilen der Antriebseinheiten führen, wodurch ein erhöhter Verschleiß auftritt. Um dies zu verhindern, sind erfindungsgemäß ein oder mehrere Federelemente vorgesehen, die sich bei dem Pressvorgang elastisch verformen und so eine Verformung, zum Beispiel Verbiegung, des Kraftübertragungselements absorbieren. Die Federelemente befinden sich dazu zwischen dem Kraftübertragungselement und der oberen und/oder der unteren Antriebseinheit. Es wird also eine (nahezu vollständige) Entkopplung des Kraftübertragungselements von den Antriebseinheiten erreicht, so dass eine im Betrieb der Presse auftretende Verformung des Kraftübertragungselements nicht zu einer Verkippung oder ähnlichen Fehlausrichtung der hiermit verbundenen Antriebseinheiten führt. Außerdem werden durch die Federelemente eventuelle Verspannungen zwischen unterschiedlichen Antriebseinheiten der Presse ausgeglichen, die zum Beispiel aufgrund von mechanischen Toleranzen entstehen können. Auch hierdurch wird der Pressvorgang optimiert und der Verschleiß wird verringert. Als Federelemente kommen zum Beispiel Tellerfedern, Plattenfedern etc. in Frage. Sie können beispielsweise aus einem Metallwerkstoff, einem Kunststoff oder einem Gummiwerkstoff bestehen.

Der Pressenrahmen kann eine obere und eine untere Halteplatte aufweisen, die durch mehrere vertikale Abstandhalter miteinander verbunden sind. Hierdurch wird eine besonders hohe Stabilität erreicht. Die Halteplatte und die vertikalen Abstandhalter können dabei auch ein Schweißteil sein. Der mindestens eine Antriebsmotor der mindestens einen oberen Antriebseinheit kann an der oberen Halteplatte des Pressenrahmens befestigt sein. Entsprechend kann der mindestens eine Antriebsmotor der mindestens einen unteren Antriebseinheit an der unteren Halteplatte des Pressenrahmens befestigt sein. Der mindestens eine obere Antriebsmotor und/oder der mindestens eine untere Antriebsmotor sind also an dem Pressenrahmen angeordnet, so dass sie sich bei einer vertikalen Bewegung des oberen Pressstempels und/oder des unteren Pressstempels und/oder der Aufnahme nicht in vertikaler Richtung mitbewegen. Hierdurch wird die Stabilität erhöht und das Pressergebnis verbessert.

Das obere Kraftübertragungselement und/oder das untere Kraftübertragungselement kann eine sich in horizontaler Richtung erstreckende obere Kraftübertragungsbrücke umfassen. Die Kraftübertragungsbrücken können balkenförmig ausgebildet sein. Es ergibt sich eine konstruktiv besonders einfache und gleichzeitig gleichmäßige Krafteinleitung von den Antriebseinheiten in die Presseinheit, insbesondere zu den Pressstempeln bzw. der Aufnahme.

Nach einer weiteren Ausgestaltung kann vorgesehen sein, dass mindestens zwei obere Antriebseinheiten mit jeweils einem oberen Antriebsmotor vorgesehen sind, die über das obere Kraftübertragungselement jeweils seitlich versetzt auf den mindestens einen oberen Pressstempel wirken, wobei zwischen dem oberen Kraftübertragungselement und den mindestens zwei oberen Antriebseinheiten jeweils mindestens ein oberes, sich bei einem Pressvorgang verformendes Federelement angeordnet ist. Die mindestens zwei oberen Antriebseinheiten können vorzugsweise an gegenüberliegenden Enden der oberen Kraftübertragungsbrücke angreifen. Entsprechend kann vorgesehen sein, dass mindestens zwei untere Antriebseinheiten mit jeweils einem unteren Antriebsmotor vorgesehen sind, die über das untere Kraftübertragungselement jeweils seitlich versetzt auf den mindestens einen unteren Pressstempel und/oder die Aufnahme wirken, wobei zwischen dem unteren Kraftübertragungselement und den mindestens zwei unteren Antriebseinheiten jeweils mindestens ein unteres, sich bei einem Pressvorgang verformendes Federelement angeordnet ist. Die mindestens zwei unteren Antriebseinheiten können wiederum vorzugsweise an gegenüberliegenden Enden der unteren Kraftübertragungsbrücke angreifen.

Die obere Kraftübertragungsbrücke kann beispielsweise mittig mit dem oberen Pressstempel bzw. einer den oberen Pressstempel tragenden oberen Stempelplatte verbunden sein. Entsprechend kann die untere Kraftübertragungsbrücke beispielsweise mittig mit dem unteren Pressstempel bzw. einer den unteren Pressstempel tragenden unteren Stempelplatte oder der Aufnahme verbunden sein. Zwischen der oberen Kraftübertragungsbrücke und dem oberen Pressstempel bzw. einer oberen Stempelplatte kann ein weiteres oberes Kraftübertragungselement vorgesehen sein. Entsprechend kann auch zwischen der unteren Kraftübertragungsbrücke und dem unteren Pressstempel bzw. einer unteren Stempelplatte bzw. der Aufnahme ein weiteres unteres Kraftübertragungselement angeordnet sein. Bei einer Bewegung der jeweiligen Kraftübertragungsbrücke, angetrieben durch die oberen und/oder unteren Antriebseinheiten, werden dann auch der obere und/oder untere Presstempel bzw. die Aufnahme angetrieben. Es können auch beispielsweise vier obere und/oder vier untere Antriebseinheiten vorgesehen sein. In diesem Fall können je zwei Antriebseinheiten an einem Ende der Kraftübertragungsbrücke angreifen. Das Angreifen der Antriebseinheiten an den gegenüberliegenden Enden der Kraftübertragungsbrücke führt zu einer besonders gleichmäßigen Krafteinleitung.

Selbstverständlich kann zwischen dem oberen bzw. unteren Kraftübertragungselement und der mindestens einen oberen bzw. unteren Antriebseinheit jeweils ein oberes bzw. unteres, sich bei einem Pressvorgang verformendes Federelement oder eine Vielzahl oberer bzw. unterer, sich bei dem Pressvorgang verformender Federelemente angeordnet sein. Es ist weiter vorgesehen, dass mindestens ein oberer Flansch der mindestens einen oberen Antriebseinheit über mehrere Befestigungsmittel mit dem oberen Kraftübertragungselement verbunden ist, wobei auf die Befestigungsmittel mindestens ein einen Abstandhalter zwischen dem oberen Flansch und dem oberen Kraftübertragungselement bildendes, sich bei einem Pressvorgang verformendes oberes Federelement aufgesteckt ist, und/oder dass mindestens ein unterer Flansch der mindestens einen unteren Antriebseinheit über mehrere Befestigungsmittel mit dem unteren Kraftübertragungselement verbunden ist, wobei auf die Befestigungsmittel mindestens ein einen Abstandhalter zwischen dem unteren Flansch und dem unteren Kraftübertragungselement bildendes, sich bei einem Pressvorgang verformendes unteres Federelement aufgesteckt ist. Das mindestens eine Federelement kann zum Beispiel ringförmig sein. Das mindestens eine Federelement sitzt dann auf den Befestigungsmitteln zwischen dem Flansch der jeweiligen Antriebseinheit und dem jeweiligen Kraftübertragungselement. Hierdurch wird in besonders einfacher Weise eine (teilweise) Entkopplung des Kraftübertragungselements von der jeweiligen Antriebseinheit erreicht. Insbesondere wird so in besonders einfacher Weise eine Verbiegung einer beispielsweise balkenförmigen Kraftübertragungsbrücke erlaubt, ohne dass dies sich nachteilig auf die Antriebseinheiten, insbesondere ihre Ausrichtung, auswirkt. Um eine umfassende Federung der Befestigungsmittel zu erlauben, kann weiterhin vorgesehen sein, dass auf die Befestigungsmittel mindestens ein einen Abstandhalter zwischen den Befestigungsmitteln, beispielsweise Köpfen oder Muttern der Befestigungsmittel, und dem oberen bzw. unteren Flansch oder dem oberen bzw. unteren Kraftübertragungselement bildendes zweites, sich bei einem Pressvorgang verformendes oberes bzw. unteres Federelement aufgesteckt ist. Auch dieses zweite Federelement kann ringförmig sein. Die Befestigungsmittel können mit oder ohne Spiel durch den jeweiligen Flansch gesteckt und in das jeweilige Kraftübertragungselement eingeschraubt sein. Es ist aber auch möglich, dass die Befestigungsmittel mit oder ohne Spiel durch das jeweilige Kraftübertragungselement gesteckt und in den jeweiligen Flansch eingeschraubt sind. Bei den Befestigungsmitteln kann es sich beispielsweise um Gewindebolzen handeln. Es sind aber auch andere Befestigungsmittel möglich. Auch ist es möglich, dass auf die Befestigungsmittel jeweils mindestens ein Federelement aufgesteckt ist. Bei dieser Ausgestaltung wird die Entkopplung also jeweils durch eine Mehrzahl von Federelementen gewährleistet.

Erfindungsgemäß ist vorgesehen, dass der mindestens eine obere Antriebsmotor der oberen Antriebseinheit mindestens ein elektrischer Antriebsmotor ist, wobei die mindestens eine obere Antriebseinheit mindestens einen durch den mindestens einen elektrischen Antriebsmotor angetriebenen oberen Spindeltrieb mit einer oberen Spindelmutter umfasst und/oder dass der mindestens eine untere Antriebsmotor der unteren Antriebseinheit mindestens ein elektrischer Antriebsmotor ist, wobei die mindestens eine untere Antriebseinheit mindestens einen durch den mindestens einen elektrischen Antriebsmotor angetriebenen unteren Spindeltrieb mit einer unteren Spindelmutter umfasst. Mit solchen elektrischen

Spindelantrieben kann eine besonders präzise Steuerung der aufgebrachten Kräfte erfolgen, insbesondere bei der Verwendung mehrerer parallel wirkender Antriebseinheiten. Gleichzeitig sind sehr hohe Kräfte übertragbar. Der mindestens eine elektrische Antriebsmotor kann mindestens ein Hohlwellenmotor sein.

Der mindestens eine obere Flansch ist ein Flansch der mindestens einen oberen Spindelmutter eines Spindeltriebs und/oder der mindestens eine untere Flansch ist ein Flansch der mindestens einen unteren Spindelmutter eines Spindelantriebs. Eine Verkippung der Spindelmutter aufgrund einer Verbiegung des Kraftübertragungselements wird bei dieser Ausgestaltung sicher vermieden. Es wird eine besonders weitgehende Entkopplung des jeweiligen Kraftübertragungselements von den Spindelmuttern und damit den Antriebseinheiten erreicht. Der jeweilige elektrische Antriebsmotor kann insbesondere eine Spindel des jeweiligen Spindeltriebs drehend antreiben, während die jeweilige Spindelmutter durch den Flansch fest an dem jeweiligen Kraftübertragungselement angeordnet ist. Die Drehbewegung der jeweiligen Spindel führt dann zu einer axialen Bewegung der jeweiligen Spindelmutter, die über die Flanschverbindung auf das jeweilige Kraftübertragungselement und somit auf die Presseinheit, insbesondere den oberen bzw. unteren Pressstempel oder die Aufnahme, übertragen wird.

Nach einer weiteren Ausgestaltung kann die mindestens eine obere Spindelmutter verdrehsicher in mindestens einer oberen Aufnahme des oberen Kraftübertragungselements gehalten sein. Entsprechend kann die mindestens eine untere Spindelmutter verdrehsicher in mindestens einer Aufnahme des unteren Kraftübertragungselements gehalten sein. Die Verdrehsicherung verhindert Schlupf beim Antrieb. Sie kann zum Beispiel durch eine Nut- und Federverbindung realisiert sein. Um gleichzeitig eine Verkippung zwischen dem Kraftübertragungselement und dem Antrieb, insbesondere einer Spindelmutter, zu erlauben, können eine Nut und eine Feder einer Verdrehsicherung in Axialrichtung der Spindelmutter verlaufen. Sie können weiterhin an einer Umfangsposition der Spindelmutter bzw. der Aufnahme angeordnet sein, die auf der (mittigen) Längsachse des Kraftübertragungselements, zum Beispiel einer balkenförmigen Kraftübertragungsbrücke, liegt.

Zwischen einer Innenfläche der mindestens einen oberen Aufnahme und einer Außenfläche der mindestens einen oberen Spindelmutter kann ein Abstand bestehen. Entsprechend kann zwischen einer Innenfläche der mindestens einen unteren Aufnahme und einer Außenfläche der mindestens einen unteren Spindelmutter ein Abstand bestehen. Bei dieser Ausgestaltung wird die Spindelmutter also mit Spiel in der jeweiligen Aufnahme gehalten. Die Aufnahme kann beispielsweise eine kreiszylindrische Aufnahme sein. Entsprechend kann dann der in der kreiszylindrischen Aufnahme aufgenommene Teil der Spindelmutter ebenfalls kreiszylindrisch sein. Der Durchmesser des in der Aufnahme aufgenommenen Teils der Spindelmutter ist dann etwas geringer als der Durchmesser der Aufnahme. Es wird dann eine Verkippung zwischen dem Kraftübertragungselement und dem Antrieb, insbesondere der Spindelmutter, und damit eine (teilweise) Entkopplung durch die Federelemente gewährleistet.

Zwischen der oberen und unteren Halteplatte des Pressenrahmens kann ein an den vertikalen Abstandhaltern des Pressenrahmens angeordnetes Tragelement vorgesehen sein. Das Tragelement kann beispielsweise einstückig ausgebildet sein. Es ist möglich, dass die obere Antriebseinheit und/oder die untere Antriebseinheit an dem Tragelement angeordnet sind. Die mindestens eine obere Antriebseinheit und/oder die mindestens eine untere Antriebseinheit können sich im Betrieb derart an dem Tragelement abstützen, dass die Reaktionskräfte, die von den beim Verpressen des pulverförmigen Materials in der mindestens einen Aufnahme erzeugten Presskräften als Aktionskräfte generiert werden, in das Tragelement eingeleitet werden. Die obere Antriebseinheit kann zwischen dem Tragelement und dem oberen Pressstempel bzw. einer oberen Stempelplatte angeordnet sein. Die untere Antriebseinheit kann entsprechend zwischen dem Tragelement und dem unteren Pressstempel bzw. einer unteren Stempelplatte oder der Aufnahme angeordnet sein. Das Vorsehen einer solchen Tragplatte erhöht insgesamt die Stabilität der Presse und verringert den Einfluss von Bauteiltoleranzen oder Verformungen im Betrieb auf das Pressergebnis.

Ein oberes Festlager mindestens einer oberen Spindel mindestens eines oberen Spindeltriebs kann an dem Tragelement befestigt sein. Entsprechend kann ein unteres Festlager mindestens einer unteren Spindel mindestens eines unteren Spindeltriebs an dem Tragelement befestigt sein. Es ist auch möglich, dass ein oberes Festlager mindestens einer oberen Spindel mindestens eines oberen Spindeltriebs an dem oberen Pressstempel bzw. einer oberen Stempelplatte befestigt ist und/oder das ein unteres Festlager mindestens einer unteren Spindel des mindestens einen unteren Spindeltriebs an dem unteren Presstempel bzw. einer unteren Stempelplatte oder der Aufnahme befestigt ist. Die mindestens eine obere bzw. untere Spindelmutter kann, wie bereits erläutert, an dem oberen bzw. unteren Kraftübertragungselement befestigt sein, zum Beispiel über eine Flanschverbindung.

Die Aufnahme der Presseinheit kann an dem Tragelement angeordnet sein. Wie bereits erwähnt, kann die Aufnahme in einer Matrizenplatte ausgebildet sein. Die Matrizenplatte kann separat von dem Tragelement ausgebildet sein und zum Beispiel an dem Tragelement befestigt sein. Die Ober- und Unterstempel können dann relativ zu dem Tragelement und damit der Matrizenplatte mit der Aufnahme beweglich sein. Für eine besonders hohe Stabilität kann das Tragelement eine U-Form besitzen, die in einer senkrecht zur Längsachse des Pressenrahmens orientierten Ebene, insbesondere einer horizontalen Ebene, liegt.

Ein Ausführungsbeispiel der Erfindung wird nachfolgend anhand von Figuren näher erläutert. Es zeigen schematisch:
- Fig. 1: eine erfindungsgemäße Presse in einer perspektivischen Ansicht,
- Fig. 2: eine vergrößerte Detailansicht der Presse aus Fig. 1.

Soweit nichts anderes angegeben ist, bezeichnen in den Figuren gleiche Bezugszeichen gleiche Gegenstände. Die erfindungsgemäße Presse besitzt einen Pressenrahmen 10 mit einer oberen Halteplatte 12 und einer unteren Halteplatte 14. Über in dem gezeigten Beispiel vier in vertikaler Richtung verlaufende Abstandhalter 16 sind die oberen und unteren Halteplatten 12, 14 miteinander und mit einem zwischen der oberen und unteren Halteplatte 12, 14 etwa mittig angeordneten Tragelement 18 verbunden. Das Tragelement 18 ist in dem gezeigten Beispiel einstückig ausgebildet und besitzt ein in einer horizontalen Ebene, einer Anordnungs- oder Erstreckungsebene, liegendes U-Profil. Die untere Halteplatte 14 steht über vier Stützbeine 20 auf dem Untergrund auf. Die Presse besitzt darüber hinaus eine obere Stempelplatte 22 mit einem nicht gezeigten Oberstempel und eine untere Stempelplatte 24 mit einem ebenfalls nicht gezeigten Unterstempel. Zwischen der oberen Stempelplatte 22 und der unteren Stempelplatte 24 ist in dem gezeigten Beispiel eine Matrizenplatte 26 angeordnet mit einer nicht gezeigten Aufnahme für durch die Ober- und Unterstempel zu verpressendes Pulver, beispielsweise Metall- oder Keramikpulver. Die obere Stempelplatte 22, die untere Stempelplatte 24 und die Matrizenplatte 26 sind in dem gezeigten Beispiel über vier vertikale Führungssäulen 28 miteinander verbunden. Die Matrizenplatte 26 ist in dem gezeigten Beispiel an dem Tragelement 18 direkt befestigt.

Die Presse umfasst darüber hinaus zwei obere Antriebseinheiten zum vertikalen Verfahren der oberen Stempelplatte 22 und zwei untere Antriebseinheiten zum vertikalen Verfahren der unteren Stempelplatte 24. Die oberen und unteren Antriebseinheiten sind jeweils auf gegenüberliegenden Seiten des Pressenrahmens 10 angeordnet. Die oberen Antriebseinheiten umfassen jeweils einen auf der oberen Halteplatte 12 angeordneten oberen elektrischen Antriebsmotor 30 und einen oberen Spindeltrieb. In dem gezeigten Beispiel ist ein oberes Festlager 32 der oberen Spindeltriebe jeweils direkt an der Oberseite des Tragelements 18 befestigt. Eine Befestigung an der Unterseite ist jedoch ebenfalls möglich. Die elektrischen Antriebsmotoren 30 treiben jeweils eine axial feststehende obere Spindel 34 drehend an. Auf den oberen Spindeln 34 ist jeweils eine obere Spindelmutter 36 axial beweglich angeordnet. Bei einer Drehung der oberen Spindeln 34 kommt es somit zu einer axialen Bewegung der jeweiligen oberen Spindelmutter 36. Die oberen Spindelmuttern 36 sind an gegenüberliegenden Enden einer oberen balkenförmigen Kraftübertragungsbrücke 38 befestigt, die mittig über ein weiteres Kraftübertragungselement 40 mit der oberen Stempelplatte 22 verbunden ist. Die oberen Antriebseinheiten mit ihren oberen Antriebsmotoren 30 wirken also seitlich versetzt auf die obere Stempelplatte 22 und damit den Oberstempel. Auf diese Weise wird eine axiale Bewegung der oberen Spindelmuttern 36 auf die obere Stempelplatte 22 übertragen, so dass diese in vertikaler Richtung bewegt wird.

Der Aufbau der beiden unteren Antriebseinheiten ist insoweit identisch. So weisen die unteren Antriebseinheiten jeweils einen an der unteren Halteplatte 14 angeordneten unteren elektrischen Antriebsmotor 42 auf, der jeweils eine axial feststehende untere Spindel 44 antreibt, wobei jeweils ein unteres Festlager 46 der unteren Spindeltriebe an der Unterseite des Tragelements 18 direkt befestigt ist. Auch eine Befestigung an der Oberseite ist jedoch möglich. Wiederum ist auf den unteren Spindeln 44 jeweils eine axial bewegliche untere Spindelmutter 50 angeordnet. Die unteren Spindelmuttern 50 sind wiederum an gegenüberliegenden Enden einer unteren balkenförmigen Kraftübertragungsbrücke 52 angebracht, die über ein weiteres Kraftübertragungselement 54 mittig mit der unteren Stempelplatte 24 verbunden ist. Treiben die unteren elektrischen Antriebsmotoren 42 die unteren Spindeln 44 drehend an, kommt es also wiederum zu einer axialen Bewegung der unteren Spindelmuttern 50, die über die untere Kraftübertragungsbrücke 52 und das Kraftübertragungselement 54 auf die untere Stempelplatte 24 übertragen wird, so dass diese in vertikaler Richtung bewegt wird. Wiederum wirken die unteren Antriebseinheiten mit ihren unteren Antriebsmotoren 42 also seitlich versetzt auf die untere Stempelplatte 24 und damit den Unterstempel.

Erkennbar stützen sich die oberen Antriebseinheiten über ihre oberen Festlager 32 und die unteren Antriebseinheiten über ihre unteren Festlager 46 jeweils direkt an dem Tragelement 18 ab. Bei einem Pressvorgang erfolgt also ein Kraftfluss zwischen dem Oberstempel in die obere Stempelplatte 22, von dieser über das obere Kraftübertragungselement 40 und die obere Kraftübertragungsbrücke 38 in die beiden oberen Antriebseinheiten, insbesondere die oberen Spindeln 34 und die oberen Festlager 32 und von diesen in das Tragelement 18. Entsprechend erfolgt ein Kraftfluss von dem Unterstempel in die untere Stempelplatte 24 und über das untere Kraftübertragungselement 54 und die untere Kraftübertragungsbrücke 52 in die unteren Antriebseinheiten, insbesondere die unteren Spindeln 44 und die unteren Festlager 46 und von diesen wiederum in das Tragelement 18. Es befinden sich somit vergleichsweise wenige Komponenten im Kraftfluss, so dass sich auch entsprechend wenige Bauteiltoleranzen aufaddieren. Da die Anordnungsebene des Tragelements 18 in derselben horizontalen Ebene liegt wie die Matrizenplatte 26 oder in einer von dieser geringfügig beabstandeten Ebene und die vertikalen Abstandhalter 16 an dem Kraftfluss im Wesentlichen nicht teilnehmen, kommt es auch nicht zu einer erheblichen Auffederung und damit Verbiegung des Pressenrahmens 10. Darüber hinaus kann das die Presskräfte aufnehmende Tragelement 18 präzise und mit geringen Toleranzen gefertigt werden. Die Antriebsmotoren 30, 42 werden bei einer Bewegung der Stempelplatten 22, 24 nicht mitbewegt.

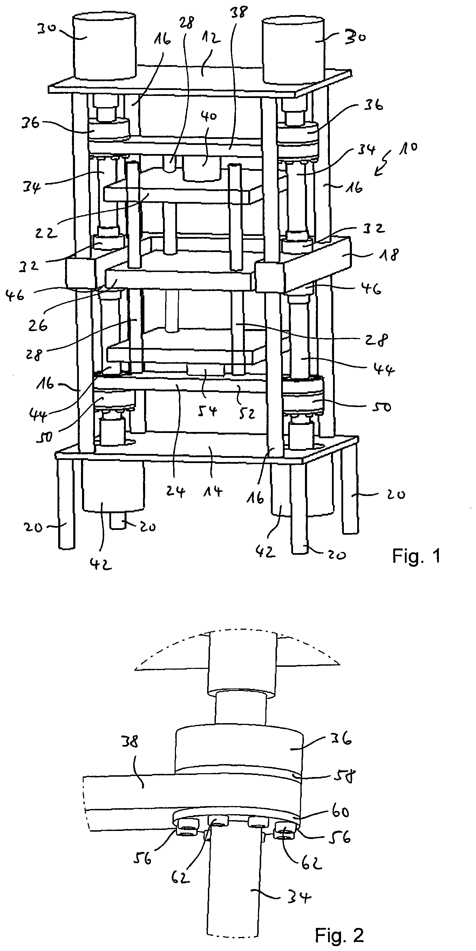

Dennoch kann es aufgrund der im Betrieb auftretenden sehr hohen Presskräfte zu einer Verbiegung der Kraftübertragungsbrücken 38 bzw. 52 kommen. Um zu verhindern, dass eine solche Verbiegung der Kraftübertragungsbrücken 38, 52 zu einer Verkippung der Spindelmuttern 36, 50 und damit einer Fehlausrichtung der Spindeltriebe führt, sind erfindungsgemäß Federelemente vorgesehen. Dies soll anhand der vergrößerten Ausschnittsdarstellung in Fig. 2 erläutert werden. In Fig. 2 ist die in Fig. 1 rechte Anbindung der oberen Spindelmutter 36 an der Kraftübertragungsbrücke 38 gezeigt. Die Anbindung der linken oberen Spindelmutter 36 in Fig. 1 an der oberen Kraftübertragungsbrücke 38 sowie die Anbindungen der unteren Spindelmuttern 50 an der unteren Kraftübertragungsbrücke 52 sind insoweit jeweils identisch, so dass auf die nachstehenden Erläuterungen Bezug genommen wird.

In Fig. 2 ist zu erkennen, dass die Spindelmutter 36 gleichzeitig einen Flansch bildet, der mit mehreren Befestigungsmitteln, in dem gezeigten Beispiel mehreren Gewindebolzen 56, an der oberen Kraftübertragungsbrücke 38 befestigt ist. Anstelle der Gewindebolzen 56 sind natürlich auch andere Befestigungsmittel denkbar. In dem gezeigten Beispiel sind die Gewindebolzen 56 durch entsprechende Bohrungen in der Kraftübertragungsbrücke 38 gesteckt und in die Spindelmutter 36 eingeschraubt. Es wäre aber auch denkbar, die Gewindebolzen 56 durch entsprechende Bohrungen der Spindelmutter 36 zu stecken und in die Kraftübertragungsbrücke 38 einzuschrauben. Auf die Gewindebolzen 56 ist ein erstes ringförmiges Federelement 58 aufgesteckt, welches einen Abstandhalter zwischen der Spindelmutter 36 und der Kraftübertragungsbrücke 38 bildet. Darüber hinaus ist auf die Gewindebolzen 56 ein zweites ebenfalls ringförmiges Federelement 60 aufgesteckt, welches einen Abstandhalter zwischen den Köpfen 62 der Gewindebolzens 56 und der oberen Kraftübertragungsbrücke 38 bildet. Bei den Federelementen 58, 60 kann es sich beispielsweise um Platten- oder Tellerfedern handeln. Sie können aus einem Metallwerkstoff bestehen. Alternativ ist es auch möglich, dass sie aus einem Kunststoff oder einem Gummiwerkstoff bestehen.

Darüber hinaus ist die Spindelmutter 36 mit einem nicht dargestellten kreiszylindrischen Ansatz in einer ebenfalls kreiszylindrischen Aufnahme der Kraftübertragungsbrücke 38 aufgenommen. Der Außendurchmesser des Ansatzes ist geringfügig kleiner als der Innendurchmesser der Aufnahme der Kraftübertragungsbrücke 38. Die Spindelmutter 36 ist also mit einem geringen Spiel in der Aufnahme der Kraftübertragungsbrücke 38 gehalten. Über eine nicht gezeigte Nut-Federverbindung ist der Ansatz und damit die Spindelmutter 36 in der Aufnahme verdrehsicher gehalten. Insbesondere kann sich beispielsweise eine Feder in axialer Richtung an dem Außenumfang des Ansatzes erstrecken. Eine entsprechende, sich in axialer Richtung erstreckende Nut ist dann in der Aufnahme der Kraftübertragungsbrücke 38 ausgebildet. Natürlich ist es auch möglich, dass sich eine Nut in axialer Richtung an dem Außenumfang des Ansatzes erstreckt. Eine entsprechende, sich in axialer Richtung erstreckende Feder ist dann in der Aufnahme der Kraftübertragungsbrücke 38 ausgebildet. Die Nut und Feder können dabei auf einem Umfangsabschnitt der Aufnahme bzw. des Ansatzes ausgebildet sein, der auf der zentralen Längsachse der Kraftübertragungsbrücke 38 liegt.

Kommt es bei einem Pressvorgang zu einer Verbiegung der Kraftübertragungsbrücke 38, so führt dies zu einer entsprechenden elastischen Verformung der Federelemente 58, 60. Diese elastische Verformung der Federelemente 58, 60 führt zu einer (weitgehenden) Entkopplung zwischen dem Kraftübertragungselement 38 und der Spindelmutter 36 dahingehend, dass die Verbiegung der Kraftübertragungsbrücke 38 nicht zu einer Verkippung der Spindelmutter 36 führt. Vielmehr wird die Verbiegung der Kraftübertragungsbrücke 38 durch die sich verformenden Federelemente 58, 60 absorbiert, so dass die Spindelmutter 36 weiterhin ihre vorgesehene Ausrichtung beibehält und die Spindel 34 ohne Verspannungen in der Spindelmutter 36 geführt wird. Die Aufnahme der Spindelmutter 36 mit geringem Spiel in der Kraftübertragungsbrücke 38 und die Nut-Federverbindung erlauben eine entsprechende Relativbewegung zwischen den äußeren Enden der Kraftübertragungsbrücke 38 und der jeweiligen Spindelmutter 36. Darüber hinaus kommt es durch das Vorsehen der Federelemente 58, 60 zu einem Ausgleich von gegebenenfalls vorhandenen Verspannungen zwischen den oberen und/oder unteren Antriebseinheiten, beispielsweise aufgrund mechanischer Toleranzen. Hierdurch wird der Verschleiß der Presse weiter verringert.

Zu erwähnen ist noch, dass bei den Verbindungen der unteren Spindelmuttern 50 mit der unteren Kraftübertragungsbrücke 52 die Gewindebolzen 56 durch entsprechende Bohrungen der unteren Spindelmuttern 50 hindurchgeführt und in die untere Kraftübertragungsbrücke 52 eingeschraubt sind. Dies aufgrund der Tatsache, dass die unteren Spindelmuttern 50 unterhalb der unteren Kraftübertragungsbrücke 52 angeordnet sind, während die oberen Spindelmuttern 36 oberhalb der oberen Kraftübertragungsbrücke 38 angeordnet sind (siehe Fig. 1). Es sei allerdings darauf hingewiesen, dass ebenso eine Verschraubung der unteren Gewindebolzen in den unteren Spindelmuttern möglich ist. Entsprechend ist auch eine Verschraubung der oberen Gewindebolzen in der oberen Kraftübertragungsbrücke möglich. Im Übrigen ist, wie bereits erläutert, die Verbindung zwischen den unteren Spindelmuttern 50 und der unteren Kraftübertragungsbrücke 52 identisch zu der Verbindung der oberen Spindelmuttern 36 mit der oberen Kraftübertragungsbrücke 38. Entsprechend ist auch die oben erläuterte Funktion der jeweils vorgesehenen Federelemente identisch.

## Patentansprüche

1. Presse zur Herstellung eines Presslings aus pulverförmigem Material, umfassend
- einen Pressenrahmen und eine in dem Pressenrahmen angeordnete Presseinheit mit mindestens einem oberen Pressstempel und/oder mindestens einem unteren Pressstempel sowie mindestens einer Aufnahme für durch den oberen und/oder unteren Pressstempel zu verpressendes pulverförmiges Material,
- mindestens eine obere Antriebseinheit mit mindestens einem oberen Antriebsmotor (30) zum Verfahren des oberen Pressstempels in vertikaler Richtung und/oder mindestens eine untere Antriebseinheit mit mindestens einem unteren Antriebsmotor (42) zum Verfahren des unteren Pressstempels und/oder der Aufnahme in vertikaler Richtung,
- wobei die mindestens eine obere Antriebseinheit über mindestens ein oberes Kraftübertragungselement (38) seitlich versetzt auf den mindestens einen oberen Pressstempel wirkt und/oder wobei die mindestens eine untere Antriebseinheit über mindestens ein unteres Kraftübertragungselement (52) seitlich versetzt auf den mindestens einen unteren Pressstempel und/oder die Aufnahme wirkt, und
- wobei zwischen dem oberen Kraftübertragungselement (38) und der mindestens einen oberen Antriebseinheit mindestens ein oberes, sich bei einem Pressvorgang verformendes Federelement (58, 60) angeordnet ist und/oder wobei zwischen dem unteren Kraftübertragungselement (52) und der mindestens einen unteren Antriebseinheit mindestens ein unteres, sich bei einem Pressvorgang verformendes Federelement (58, 60) angeordnet ist,
**dadurch gekennzeichnet,**
- **dass** mindestens ein oberer Flansch der mindestens einen oberen Antriebseinheit über mehrere Befestigungsmittel (56) mit dem oberen Kraftübertragungselement (38) verbunden ist, wobei auf die Befestigungsmittel (56) mindestens ein einen Abstandhalter zwischen dem oberen Flansch und dem oberen Kraftübertragungselement (38) bildendes, sich bei einem Pressvorgang verformendes oberes Federelement (58) aufgesteckt ist, und/oder dass mindestens ein unterer Flansch der mindestens einen unteren Antriebseinheit über mehrere Befestigungsmittel (56) mit dem unteren Kraftübertragungselement (52) verbunden ist, wobei auf die Befestigungsmittel (56) mindestens ein einen Abstandhalter zwischen dem unteren Flansch und dem unteren Kraftübertragungselement (52) bildendes, sich bei einem Pressvorgang verformendes unteres Federelement (58) aufgesteckt ist,
- **dass** der mindestens eine obere Antriebsmotor (30) der oberen Antriebseinheit mindestens ein elektrischer Antriebsmotor (30) ist, wobei die mindestens eine obere Antriebseinheit mindestens einen durch den mindestens einen elektrischen Antriebsmotor (30) angetriebenen oberen Spindeltrieb mit einer oberen Spindelmutter (36) umfasst und/oder dass der mindestens eine untere Antriebsmotor (42) der unteren Antriebseinheit mindestens ein elektrischer Antriebsmotor (42) ist, wobei die mindestens eine untere Antriebseinheit mindestens einen durch den mindestens einen elektrischen Antriebsmotor (42) angetriebenen unteren Spindeltrieb mit einer unteren Spindelmutter (50) umfasst, und
- **dass** der mindestens eine obere Flansch ein Flansch der mindestens einen oberen Spindelmutter (36) ist und/oder dass der mindestens eine untere Flansch ein Flansch der mindestens einen unteren Spindelmutter (50) ist.

2. Presse nach Anspruch 1, **dadurch gekennzeichnet, dass** der Pressenrahmen eine obere und eine untere Halteplatte (12, 14) aufweist, die durch mehrere vertikale Abstandhalter (16) miteinander verbunden sind.

3. Presse nach Anspruch 2, **dadurch gekennzeichnet, dass** der mindestens eine Antriebsmotor (30) der mindestens einen oberen Antriebseinheit an der oberen Halteplatte (12) des Pressenrahmens befestigt ist und/oder dass der mindestens eine Antriebsmotor (42) der mindestens einen unteren Antriebseinheit an der unteren Halteplatte (14) des Pressenrahmens befestigt ist.

4. Presse nach einem der vorhergehenden Ansprüche, **dadurch gekennzeichnet, dass** das obere Kraftübertragungselement (38) eine sich in horizontaler Richtung erstreckende obere Kraftübertragungsbrücke (38) umfasst und/oder dass das untere Kraftübertragungselement (52) eine sich in horizontaler Richtung erstreckende untere Kraftübertragungsbrücke (52) umfasst.

5. Presse nach einem der vorhergehenden Ansprüche, **dadurch gekennzeichnet, dass** mindestens zwei obere Antriebseinheiten mit jeweils einem oberen Antriebsmotor (30) vorgesehen sind, die über das obere Kraftübertragungselement (38) jeweils seitlich versetzt auf den mindestens einen oberen Pressstempel wirken, wobei zwischen dem oberen Kraftübertragungselement (38) und den mindestens zwei oberen Antriebseinheiten jeweils mindestens ein oberes, sich bei einem Pressvorgang verformendes Federelement (58, 60) angeordnet ist.

6. Presse nach den Ansprüchen 4 und 5, **dadurch gekennzeichnet, dass** die mindestens zwei oberen Antriebseinheiten an vorzugsweise gegenüberliegenden Enden der oberen Kraftübertragungsbrücke (38) angreifen.

7. Presse nach einem der vorhergehenden Ansprüche, **dadurch gekennzeichnet, dass** mindestens zwei untere Antriebseinheiten mit jeweils einem unteren Antriebsmotor (42) vorgesehen sind, die über das untere Kraftübertragungselement (52) jeweils seitlich versetzt auf den mindestens einen unteren Pressstempel und/oder die Aufnahme wirken, wobei zwischen dem unteren Kraftübertragungselement (52) und den mindestens zwei unteren Antriebseinheiten jeweils mindestens ein unteres, sich bei einem Pressvorgang verformendes Federelement (58, 60) angeordnet ist.

8. Presse nach Anspruch 7 und einem der Ansprüche 4 bis 6, **dadurch gekennzeichnet, dass** die mindestens zwei unteren Antriebseinheiten an vorzugsweise gegenüberliegenden Enden der unteren Kraftübertragungsbrücke (52) angreifen.

9. Presse nach einem der vorhergehenden Ansprüche, **dadurch gekennzeichnet, dass** zwischen dem oberen Kraftübertragungselement (38) und der mindestens einen oberen Antriebseinheit ein oberes, sich bei einem Pressvorgang verformendes Federelement (58, 60) oder eine Vielzahl oberer, sich bei einem Pressvorgang verformende Federelemente (58, 60) angeordnet ist und/oder dass zwischen dem unteren Kraftübertragungselement (52) und der mindestens einen unteren Antriebseinheit ein unteres, sich bei einem Pressvorgang verformendes Federelement (58, 60) oder eine Vielzahl unterer, sich bei einem Pressvorgang verformende Federelemente (58, 60) angeordnet ist.

10. Presse nach einem der vorhergehenden Ansprüche, **dadurch gekennzeichnet, dass** auf die Befestigungsmittel (56) weiterhin mindestens ein einen Abstandhalter zwischen den Befestigungsmitteln (56) und dem oberen Flansch oder dem oberen Kraftübertragungselement (38) bildendes zweites, sich bei einem Pressvorgang verformendes oberes Federelement (60) aufgesteckt ist.

11. Presse nach einem der vorhergehenden Ansprüche, **dadurch gekennzeichnet, dass** auf die Befestigungsmittel (56) weiterhin jeweils mindestens ein einen Abstandhalter zwischen den Befestigungsmitteln (56) und dem unteren Flansch oder dem unteren Kraftübertragungselement (52) bildendes zweites, sich bei einem Pressvorgang verformendes unteres Federelement (60) aufgesteckt ist.

12. Presse nach einem der vorhergehenden Ansprüche, **dadurch gekennzeichnet, dass** die mindestens eine obere Spindelmutter (36) verdrehsicher in mindestens einer oberen Aufnahme des oberen Kraftübertragungselements (38) gehalten ist und/oder dass die mindestens eine untere Spindelmutter (50) verdrehsicher in mindestens einer Aufnahme des unteren Kraftübertragungselements (52) gehalten ist.

13. Presse nach Anspruch12, **dadurch gekennzeichnet, dass** zwischen einer Innenfläche der mindestens einen oberen Aufnahme und einer Außenfläche der mindestens einen oberen Spindelmutter (36) ein Abstand besteht und/oder dass zwischen einer Innenfläche der mindestens einen unteren Aufnahme und einer Außenfläche der mindestens einen unteren Spindelmutter (50) ein Abstand besteht.

14. Presse nach einem der Ansprüche 2 bis 13, **dadurch gekennzeichnet, dass** zwischen der oberen und unteren Halteplatte (14) ein an den vertikalen Abstandhaltern (16) des Pressenrahmens angeordnetes Tragelement (18) vorgesehen ist.

15. Presse nach Anspruch 14, **dadurch gekennzeichnet, dass** die Aufnahme an dem Tragelement (18) angeordnet ist.

## Claims

1. A press for producing a pellet from powdered material comprising
- a press frame and a pressing unit arranged in the press frame having at least one upper press punch and/or at least one lower press punch as well as at least one receptacle for the powdered material to be pressed by the upper and/or lower press punch,
- at least one upper drive unit having at least one upper drive motor (30) for moving the upper press punch in the vertical direction and/or at least one lower drive unit having at least one lower drive motor (42) for moving the lower press punch and/or the receptacle in the vertical direction,
- wherein the at least one upper drive unit acts laterally offset on the at least one upper press punch via at least one upper force transmission element (38), and/or wherein the at least one lower drive unit acts laterally offset on the at least one lower press punch and/or the receptacle via at least one lower force transmission element (52), and
- wherein at least one upper spring element (58, 60) that deforms during a pressing procedure is arranged between the upper force transmission element (38) and the at least one upper drive unit, and/or wherein at least one lower spring element (58, 60) that deforms during a pressing procedure is arranged between the lower force transmission element (52) and the at least one lower drive unit,
**characterized in that**
- at least one upper flange of the at least one upper drive unit is connected to the upper force transmission element (38) via a plurality of fastening means (56), wherein at least one upper spring element (58) that forms a spacer between the upper flange and the upper force transmission element (38) and that deforms during a pressing procedure is placed on the fastening means (56), and/or that at least one lower flange of the at least one lower drive unit is connected to the lower force transmission element (52) via a plurality of fastening means (56), wherein at least one lower spring element (58) that forms a spacer between the lower flange and the lower force transmission element (52) and that deforms during a pressing procedure is placed on the fastening means (56),
- that the at least one upper drive motor (30) of the upper drive unit is at least one electric drive motor (30), wherein the at least one upper drive unit comprises at least one upper spindle drive having an upper spindle nut (36) and driven by the at least one electric drive motor (30), and/or the at least one lower drive motor (42) of the lower drive unit is at least one electric drive motor (42), wherein the at least one lower drive unit comprises at least one lower spindle drive having a lower spindle nut (50) and driven by the at least one electric drive motor (42), and
- that the at least one upper flange is a flange of the at least one upper spindle nut (36) and/or that the at least one lower flange is a flange of the at least one lower spindle nut (50).

2. The press according to Claim 1, **characterized in that** the press frame has an upper and a lower retaining plate (12, 14) that are connected to one another by a plurality of vertical spacers (16).

3. The press according to Claim 2, **characterized in that** the at least one drive motor (30) of the at least one upper drive unit is fastened to the upper retaining plate (12) of the press frame and/or that the at least one drive motor (42) of the at least one lower drive unit is fastened to the lower retaining plate (14) of the press frame.

4. The press according to any one of the preceding claims, **characterized in that** the upper force transmission element (38) comprises an upper force transmission bridge (38) extending in the horizontal direction and/or that the lower force transmission element (52) comprises a lower force transmission bridge (52) extending in the horizontal direction.

5. The press according to any one of the preceding claims, **characterized in that** at least two upper drive units are each provided with an upper drive motor (30), which upper drive units each act laterally offset on the at least one upper press punch via the upper force transmission element (38), wherein in each case at least one upper spring element (58, 60) that deforms during a pressing procedure is arranged between the upper force transmission element (38) and the at least two upper drive units.

6. The press according to Claims 4 and 5, **characterized in that** the at least two upper drive units engage at preferably opposite ends of the upper force transmission bridge (38).

7. The press according to any one of the preceding claims, **characterized in that** at least two lower drive units are each provided with a lower drive motor (42), which lower drive units each act laterally offset on the at least one lower press punch and/or the receptacle via the lower force transmission element (52), wherein at least one lower spring element (58, 60) that deforms during a pressing procedure is arranged in each case between the lower force transmission element (52) and the at least two lower drive units.

8. The press according to Claim 7 and any one of Claims 4 to 6, **characterized in that** the at least two lower drive units engage at preferably opposite ends of the lower force transmission bridge (52).

9. The press according to any one of the preceding claims, **characterized in that** an upper spring element (58, 60) that deforms during a pressing procedure or a plurality of upper spring elements (58, 60) that deform during a pressing procedure is/are arranged between the upper force transmission element (38) and the at least one upper drive unit, and/or that a lower spring element (58, 60) that deforms during a pressing procedure or a plurality of lower spring elements (58, 60) that deform during a pressing procedure is/are arranged between the lower force transmission element (52) and the at least one drive unit.

10. The press according to any one of the preceding claims, **characterized in that** at least one second upper spring element (60) that forms a spacer between the fastening means (56) and the upper flange or the upper force transmission element (38) and that deforms during a pressing procedure is, in addition, placed on the fastening means (56).

11. The press according to any one of the preceding claims, **characterized in that** at least one second lower spring element (60) that forms a spacer between the fastening means (56) and the lower flange or the lower force transmission element (52) and that deforms during a pressing procedure is, in addition, in each case placed on the fastening means (56).

12. The press according to any one of the preceding claims, **characterized in that** the at least one upper spindle nut (36) is held locked against rotation in at least one upper receptacle of the upper force transmission element (38) and/or that the at least one lower spindle nut (50) is held locked against rotation in at least one receptacle of the lower force transmission element (52).

13. The press according to Claim 12, **characterized in that** a space exists between an inner surface of the at least one upper receptacle and an outer surface of the at least one upper spindle nut (36) and/or that a space exists between an inner surface of the at least one lower receptacle and an outer surface of the at least one lower spindle nut (50).

14. The press according to any one of Claims 2 to 13, **characterized in that** a bearing element (18) arranged on the vertical spacers (16) of the press frame is provided between the upper retaining plate and the lower retaining plate (14).

15. The press according to Claim 14, **characterized in that** the receptacle is arranged on the bearing element (18).

## Revendications

1. Presse pour la fabrication d'un comprimé d'une matière pulvérulente, comportant
- un châssis de presse et une unité de pressage disposée dans le châssis de presse, avec au moins un poinçon de pressage supérieur et/ou au moins un poinçon de pressage inférieur, ainsi qu'au moins un récipient pour la matière pulvérulente destinée à être comprimée par le poinçon de pressage supérieur et/ou par le poinçon de pressage inférieur,
- au moins une unité d'entraînement supérieure avec au moins un moteur d'entraînement supérieur (30) pour le déplacement du poinçon de pressage supérieur dans la direction verticale et/ou au moins une unité d'entraînement inférieure avec au moins un moteur d'entraînement inférieur (42) pour le déplacement du poinçon de pressage inférieur et/ou du récipient dans la direction verticale,
- dans laquelle l'au moins une unité d'entraînement supérieure agit sur l'au moins un poinçon de pressage supérieur de façon latéralement décalée par le biais d'au moins un élément de transmission de force supérieur (38) et/ou dans laquelle l'au moins une unité d'entraînement inférieure agit sur l'au moins un poinçon de pressage inférieur et/ou sur le récipient de façon latéralement décalée par le biais d'au moins un élément de transmission de force inférieur (52), et
- dans laquelle au moins un élément à ressort supérieur (58, 60) déformé au cours d'une opération de pressage est disposé entre l'élément de transmission de force supérieur (38) et l'au moins une unité d'entraînement supérieure, et/ou dans laquelle au moins un élément à ressort inférieur (58, 60) déformé au cours d'une opération de pressage est disposé entre l'élément de transmission de force inférieur (52) et l'au moins une unité d'entraînement inférieure,
**caractérisée en ce que**
- au moins une bride supérieure de l'au moins une unité d'entraînement supérieure est reliée à l'élément de transmission de force supérieur (38) par le biais de plusieurs moyens de fixation (56), où au moins un élément à ressort supérieur (58) déformé au cours d'une opération de pressage et formant un espaceur entre la bride supérieure et l'élément de transmission de force supérieur (38) est emboîté sur les moyens de fixation (56), et/ou **en ce qu'**au moins une bride inférieure de l'au moins une unité d'entraînement inférieure est reliée à l'élément de transmission de force inférieur (52) par le biais de plusieurs moyens de fixation (56), où au moins un élément à ressort inférieur (58) déformé au cours d'une opération de pressage et formant un espaceur entre la bride inférieure et l'élément de transmission de force inférieur (52) est emboîté sur les moyens de fixation (56),
- **en ce que** l'au moins un moteur d'entraînement supérieur (30) de l'unité d'entraînement supérieure est au moins un moteur d'entraînement électrique (30), où l'au moins une unité d'entraînement supérieure comporte au moins un entraînement à broche supérieur avec un écrou de broche supérieur (36), lequel est entraîné par l'au moins un moteur d'entraînement électrique (30), et/ou **en ce que** l'au moins un moteur d'entraînement inférieur (42) de l'unité d'entraînement inférieure est au moins un moteur d'entraînement électrique (42), où l'au moins une unité d'entraînement inférieure comporte au moins un entraînement à broche inférieur avec un écrou de broche inférieur (50), lequel est entraîné par l'au moins un moteur d'entraînement électrique (42), et
- **en ce que** l'au moins une bride supérieure est une bride de l'au moins un écrou de broche supérieur (36) et/ou **en ce que** l'au moins une bride inférieure est une bride de l'au moins un écrou de broche inférieur (50).

2. Presse selon la revendication 1, **caractérisée en ce que** le châssis de presse présente une plaque de maintien supérieure et une plaque de maintien inférieure (12, 14), lesquelles sont reliées l'une à l'autre par plusieurs espaceurs verticaux (16).

3. Presse selon la revendication 2, **caractérisée en ce que** l'au moins un moteur d'entraînement (30) de l'au moins une unité d'entraînement supérieure est fixé à la plaque de maintien supérieure (12) du châssis de presse, et/ou **en ce que** l'au moins un moteur d'entraînement (42) de l'au moins une unité d'entraînement inférieure est fixé à la plaque de maintien inférieure (14) du châssis de presse.

4. Presse selon l'une des revendications précédentes, **caractérisée en ce que** l'élément de transmission de force supérieur (38) comporte un pont de transmission de force supérieur (38) s'étendant horizontalement, et/ou **en ce que** l'élément de transmission de force inférieur (52) comporte un pont de transmission de force inférieur (52) s'étendant horizontalement.

5. Presse selon l'une des revendications précédentes, **caractérisée en ce qu'**il est prévu au moins deux unités d'entraînement supérieures comportant respectivement un moteur d'entraînement supérieur (30), lesquelles agissent sur l'au moins un poinçon de pressage supérieur de façon latéralement décalée par le biais de l'élément de transmission de force supérieur (38), où au moins un élément à ressort supérieur (58, 60) déformé au cours d'une opération de pressage est disposé respectivement entre l'élément de transmission de force supérieur (38) et les au moins deux unités d'entraînement supérieures.

6. Presse selon les revendications 4 et 5, **caractérisée en ce que** les au moins deux unités d'entraînement supérieures engagent de préférence des extrémités opposées du pont de transmission de force supérieur (38).

7. Presse selon l'une des revendications précédentes, **caractérisée en ce qu'**il est prévu au moins deux unités d'entraînement inférieures comportant respectivement un moteur d'entraînement inférieur (42), lesquelles agissent sur l'au moins un poinçon de pressage inférieur de façon latéralement décalée par le biais de l'élément de transmission de force inférieur (52), où au moins un élément à ressort inférieur (58, 60) déformé au cours d'une opération de pressage est disposé respectivement entre l'élément de transmission de force inférieur (52) et les au moins deux unités d'entraînement inférieures.

8. Presse selon la revendication 7 et l'une des revendications 4 à 6, **caractérisée en ce que** les au moins deux unités d'entraînement inférieures engagent de préférence des extrémités opposées du pont de transmission de force inférieur (52).

9. Presse selon l'une des revendications précédentes, **caractérisée en ce qu'**un élément à ressort supérieur (58, 60) déformé au cours d'une opération de pressage ou une pluralité d'éléments à ressort supérieurs (58, 60) déformés au cours d'une opération de pressage est disposé(e) entre l'élément de transmission de force supérieur (38) et l'au moins une unité d'entraînement supérieure, et/ou **en ce qu'**un élément à ressort inférieur (58, 60) déformé au cours d'une opération de pressage ou une pluralité d'éléments à ressort inférieurs (58, 60) déformés au cours d'une opération de pressage est disposé(e) entre l'élément de transmission de force inférieur (52) et l'au moins une unité d'entraînement inférieure.

10. Presse selon l'une des revendications précédentes, **caractérisée en ce qu'**un deuxième élément à ressort supérieur (60) déformé au cours d'une opération de pressage et formant un espaceur entre les moyens de fixation (56) et la bride supérieure ou l'élément de transmission de force supérieur (38) est en outre emboîté sur les moyens de fixation (56).

11. Presse selon l'une des revendications précédentes, **caractérisée en ce qu'**un deuxième élément à ressort inférieur (60) déformé au cours d'une opération de pressage et formant un espaceur entre les moyens de fixation (56) et la bride inférieure ou l'élément de transmission de force inférieur (52) est en outre emboîté sur les moyens de fixation (56).

12. Presse selon l'une des revendications précédentes, **caractérisée en ce que** l'au moins un écrou de broche supérieur (36) est maintenu sans possibilité de rotation dans au moins un récipient supérieur de l'élément de transmission de force supérieur (38) et/ou **en ce que** l'au moins un écrou de broche inférieur (50) est maintenu sans possibilité de rotation dans au moins un récipient de l'élément de transmission de force inférieur (52).

13. Presse selon la revendication 12, **caractérisée en ce qu'**il est prévu un espacement entre une surface intérieure de l'au moins un récipient supérieur et une surface extérieure de l'au moins un écrou de broche supérieur (36), et/ou **en ce qu'**il est prévu un espacement entre une surface intérieure de l'au moins un récipient inférieur et une surface extérieure de l'au moins un écrou de broche inférieur (50).

14. Presse selon l'une des revendications 2 à 13, **caractérisée en ce qu'**un élément de support (18) disposé sur les espaceurs verticaux (16) du châssis de presse est prévu entre la plaque de maintien supérieure et la plaque de maintien inférieure (14).

15. Presse selon la revendication 14, **caractérisée en ce que** le récipient est disposé sur l'élément de support (18).
